# EUROPEAN PATENT APPLICATION

(11) **EP 2 233 441 A1**
(43) Date of publication of application: **29.09.2010**
(21) Application number: 08846690.9
(22) Date of filing: 05.11.2008
(51) Int. Cl.: C02F 1/46

(54) **ELECTROLYSIS WATER GENERATOR**

(30) Priority: 08.11.2007 JP 2007291004
(71) Applicant: Hoshizaki Denki Kabushiki Kaisha, Toyoake-shi Aichi 470-1194 (JP)
(72) Inventor: FUJITA, Masahiro, Toyoake-shi Aichi 470-1194 (JP); ENDOU, Satoshi, Toyoake-shi Aichi-ken 470-1194 (JP); UKAI, Yoshiyuki, Toyoake-shi Aichi-ken,470-1194 (JP)
(74) Representative: Kramer - Barske - Schmidtchen
(86) International application number: PCT/JP2008/070131
(87) International publication number: WO 2009/060867

(57) **Abstract**

In an electrolyzed water production apparatus, an electrolytic cell is supplied with diluted brine prepared by mixture of thick brine with fresh water from a source of water, and a supply amount of thick brine to be mixed with the fresh water is adjusted under a feed-back control in such a manner that an electrolytic current of the diluted brine in the electrolytic cell becomes
a predetermined standard or reference value. The electrolyzed water production apparatus is provided with memory means for memorizing a control map indicative of an electrolytic current caused in accordance with the conductivity of the fresh water, calculation means for calculating a value of the electrolytic current on a basis of the control map and subtracting the calculate value of the electrolytic current from the standard current value, and control means for adjusting the supply amount of the thick brine to be mixed with the fresh water in such a manner that the electrolytic current of the diluted brine becomes a resultant value of subtraction from the standard value.

## Description

### Field of the Invention

The present invention relates to an electrolyzed water production apparatus, and more particularly to an electrolyzed water production apparatus of the type which comprises an electrolytic cell provided to be supplied with diluted brine prepared by mixture of thick brine with fresh water from a source of water and applied with a predetermined voltage to its electrodes.

### Discussion of the Prior Art

Disclosed in Japanese Patent Laid-open Publication No. Heisei 11 (1999)-128931 is an electrolyzed water production apparatus wherein an amount of thick brine to be mixed with fresh water from a source of water is adjusted under feed-back control in such a manner that an electrolytic current of diluted brine prepared by mixture of the thick brine with fresh water becomes a predetermined value. In this kind of an electrolyzed water production apparatus, tap water or natural water is used as the fresh water. However, the conductivity of the fresh water will differ, since an amount of electrolytic substance contained in the tap water or natural water is different in the region or environment. For example, the conductivity of tap water is, in general, about 100 mS/cm² in electrolytic operation. Accordingly, a standard supply amount of thick brine to be mixed with the fresh water is adjusted on a basis of the conductivity of the fresh water.

If the standard supply amount of thick brine was adapted to production of electrolyzed water in a region where the conductivity of fresh water is high, the supply amount of thick brine would become excessive, resulting in the occurrence of an excessive electrolytic current in the electrolytic cell. In such a case, electrolyzed water of desired characteristic may not be produced. For example, as the conductivity of fresh water in an isolated island or a foreign region is 500∼1500 mS/cm² an excessive electrolytic current will occur in the electrolytic cell. This causes defect or obstacle of component parts of the electrolyzed water production apparatus and causes useless consumption of thick brine.

In the case that the supply amount of thick brine to be mixed with fresh water is adjusted in accordance with the conductivity of the fresh water under the feed-back control described above, the electrolytic current can be controlled to a predetermined current value to avoid defect or obstacle caused by the occurrence of excessive electrolytic current. However, the supply amount of thick brine to be mixed with the fresh water may not be adjusted until the electrolytic current becomes the predetermined value under the feed-back control.

### SUMMARY OF THE INVENTION

It is, therefore, an object to adjust an initial supply amount of thick brine to be mixed with fresh water in accordance with the conductivity of fresh water at the start of electrolytic operation.

According to the present invention, the object is accomplished by providing an electrolyzed water production apparatus which comprises an electrolytic cell provided to be supplied with diluted brine prepared by mixture of thick brine with fresh water from a source of water and current detection means for detecting an electrolytic current of the diluted brine caused under a predetermined voltage applied to a set of electrodes in the electrolytic cell, wherein the supply amount of thick brine to be mixed with the fresh water is adjusted under feed-back control so that the electrolytic current of the diluted brine detected by the current detection means becomes a predetermined standard value, **characterized in that** the electrolyzed water production apparatus comprises memory means for memorizing a control map indicative of an electrolytic current caused in accordance with the conductivity of the fresh water in a condition where the electrodes have been applied with the predetermined voltage, calculation means for calculating a value of the electrolytic current detected by the detection means on a basis of the control map and subtracting the calculated electrolytic current from the standard current value, and control means for adjusting the supply amount of thick brine to be mixed with the fresh water in such a manner that the electrolytic current of the diluted brine under the feed-back control becomes a resultant value of subtraction from the standard current value.

In a practical embodiment of the present invention, only the fresh water may be introduced into the electrolytic cell before the diluted brine is electrolyzed at the start of electrolytic operation to preliminarily detect the conductivity of the fresh water. In such a case, it is useful that the supply amount of the thick brine is automatically adjusted in accordance with the conductivity of the fresh water before the supply amount of the thick brine to be mixed with the fresh water is adjusted under the feed-back control.

In the electrolyzed water production apparatus, the conductivity of fresh water supplied from the source of water is preliminarily detected, and the standard current value is corrected by subtraction of an electrolytic current caused in accordance with the detected conductivity of the fresh water therefrom. Thus, the supply amount of the thick brine to be mixed with the fresh water is adjusted in such a manner that the electrolytic current of the diluted brine under the feed-back control becomes the corrected value of the standard current. This is useful to produce electrolyzed water of desired characteristics without causing excessive mixture of the thick brine with the fresh water at the start of electrolytic operation and the occurrence of excessive electrolytic current in the electrolytic cell.

In another embodiment of the present invention, there is provided an electrolyzed water production apparatus which comprises an electrolytic cell provided to be supplied with diluted brine prepared by mixture of thick brine with fresh water from a source of water and current detection means for detecting an electrolytic current of the diluted brine caused under a predetermined voltage applied to a set of electrodes in the electrolytic cell, wherein the supply amount of thick brine to be mixed with the fresh water is adjusted under feed-back control so that the electrolytic current of the diluted brine detected by the current detection means becomes a predetermined standard value, **characterized in that** the electrolyzed water production apparatus comprises memory means for memorizing an amount of thick brine supplied to be mixed with the fresh water under the feed-back control during prior electrolytic operation and control means for adjusting the supply amount of thick brine to be mixed with the fresh water to the memorized supply amount of the thick brine at the start of the following electrolytic operation. In this embodiment, the supply amount of the thick brine to be mixed with the fresh water is adjusted to a supply amount memorized in prior electrolytic operation at the start of the following electrolytic operation. Accordingly, even if fresh water of different conductivity is supplied as the fresh water, electrolyzed water of desired characteristics can be produced without causing excessive mixture of the thick brine with the fresh water and the occurrence of excessive electrolytic current in the electrolytic cell.

### PREFERRED EMBODIMENTS OF THE INVENTION

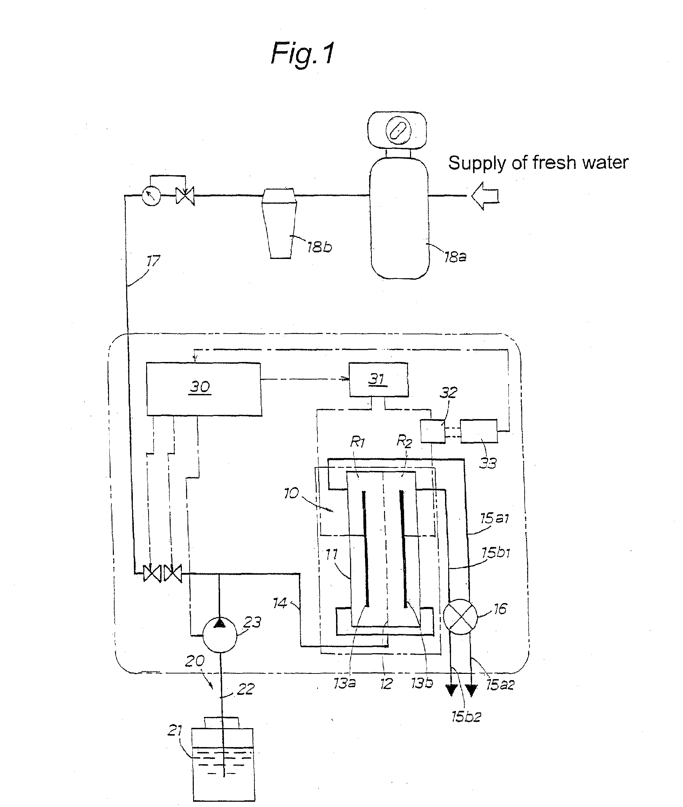

As shown in Fig.1, an electrolyzed water production apparatus of the present invention comprises an electrolytic cell 10 with a partition membrane, a diluted brine preparation device 20 and an electric controller 30. As is well known in the art, the electrolytic cell 10 has a housing 11, the interior of which is subdivided into a pair of electrolytic chambers R1, R2 by means of a partition membrane 12. A set of electrodes 13a, 13b is disposed within the electrolytic chambers R1, R2. The electrolytic chambers R1, R2 of electrolytic cell 10 are connected at their upstream-side portions with a bifurcated portion of a conduit 14 for supply of diluted brine. The electrolytic chambers R1, R2 are connected at their downstream-side portions with upstream-side conduits 15a, 15b for discharge of electrolyzed water. The upstream-side conduits 15a, 15b are connected to downstream-side conduits 15a2, 15b2 through a flow changeover valve 16.

In operation of the electrolyzed water production apparatus, each polarity of electrodes 13a, 13b in chambers R1, R2 is periodically inverted, and the flow changeover valve 16 is switched over in response to inversion of the polarity to discharge electrolyzed acid water and alkaline water selectively through the downstream-side conduit 15a2 or 15b2. In the electrolytic operation, the diluted brine supplied to the electrolytic chambers R1, R2 is electrolyzed by an electrolytic current caused by a predetermined voltage applied to the electrodes 13a, 13b from a source of electricity 31 under control of the controller 30. When the polarity of electrode 13a is positive, while the polarity of electrode 13b is negative in the electrolytic operation, electrolyzed acid water produced in chamber R1 is discharged through the upstream-side conduit 15a1 and downstream-side conduit 15a2, while electrolyzed alkaline water produced in chamber R2 is discharged through the upstream-side conduit 15b1 and downstream-side conduit 15b2. When the flow changeover valve 16 is switched over in response to inversion of each polarity of electrodes 13a, 13b under control of the controller 30, electrolyzed alkaline water produced in cathode chamber R1 is discharged through the upstream-side conduit 15a1 and downstream-side conduit 15b2, while electrolyzed acid water produced in chamber R2 is discharged through the upstream-side conduit 15b1 and downstream-side conduit 15a2. The value of electrolytic current of diluted brine in the electrolytic operation is measured by a current detector 33 connected to a current divider 32 disposed in a wiring for connecting the electrodes 13b to the source of electricity 31. The electrolytic current of diluted brine measured by the current detector 33 is equal to the conductivity of the diluted brine supplied to the electrolytic cell 10.

The diluted brine preparation device 20 for adjusting the concentration of diluted brine to be supplied to the electrolytic cell 10 comprises a brine tank 21 for storing an amount of high concentration brine such as saturated brine and a brine pump 23 of the variable discharge type disposed in a brine supply conduit 22 for supplying the thick brine from the brine tank 21. The brine supply conduit 22 is connected to a water supply conduit 17 in connection to the source of water. The brine pump 23 is driven under control of the controller 30 to supply the thick brine into the water supply conduit 17 from the brine tank 21. The tap water supplied from the source of water is treated by a water softening device 18a disposed in the water supply conduit 17 and introduced into the diluted brain supply conduit 14 through a water purifier 18b. Thick brine pumped up by operation of brine pump 23 from brine tank 21 is supplied to the water supply conduit 17 and diluted by mixture with fresh water from the water supply conduit 17. Thus, the diluted brine is supplied into the electrolytic chambers R1, R2 through the diluted brine conduit 14. The conductivity of diluted brine electrolyzed in chambers R1, R2 changes in accordance with the conductivity of the fresh water and an amount of thick brine mixed with the fresh water as described later.

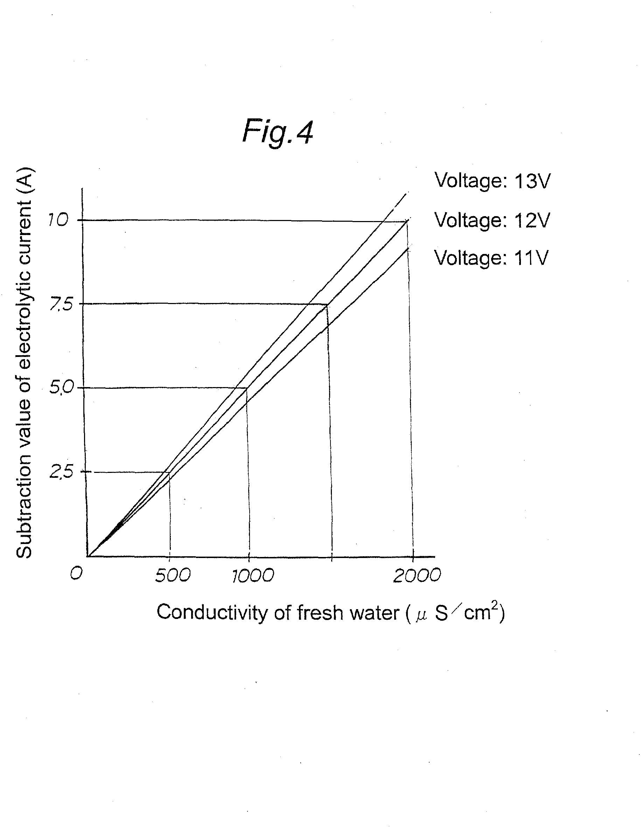

The controller 30 is in the form of a microcomputer programmed to apply a predetermined voltage to the electrodes 13a, 13b in electrolytic cell 10 and to periodically invert the polarity of the voltage to be applied to electrodes 13a, 13b. In a condition where the electrodes 13a, 13b in electrolytic cell 10 have been applied with the predetermined voltage (11V, 12V or 13V), an electrolytic current of the diluted brine will occur in accordance with the conductivity of the fresh water as shown in Fig. 4. The controller 30 comprises memory means for memorizing the graph of Fig. 4 as a control map indicative of variation of the electrolytic current. A current detector 33 detects the electrolytic current of the diluted brine. When applied with a detection signal indicative of the electrolytic current from the current detector 33, the controller 30 acts to control the operation of brine pump 23 in accordance with the detected electrolytic current thereby to control the supply amount of thick brine to be mixed with the fresh water under a feed-back control, such that the electrolytic current becomes a predetermined standard value (for instance, 10A).

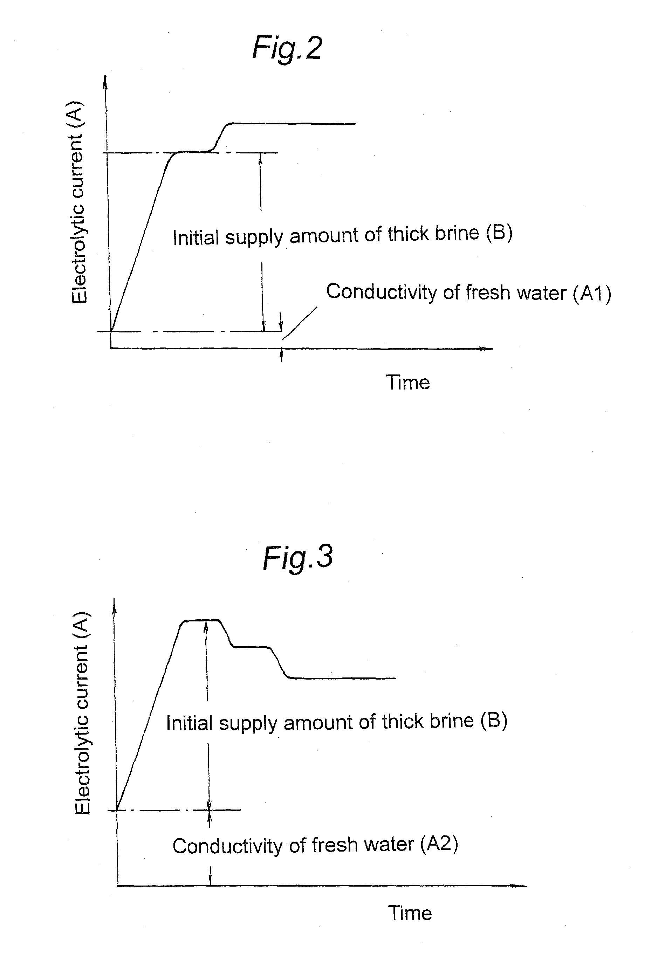

When an initial supply amount (B) of thick brine to be mixed with the fresh water is adjusted under the feed-back control at start of electrolytic operation in a condition where the conductivity (A1) of tap water as used as the fresh water is 100µS/ cm², an electrolytic current (A) caused in the electrolytic cell 10 changes in accordance with lapse of a time as shown in Fig. 2. In such an instance, the electrolytic current of the diluted brine supplied into the electrolytic cell 10 becomes a predetermined standard value L1 upon lapse of a time t₁ after start of electrolytic operation. When the conductivity (A2) of tap water or natural water used as the fresh water is 500 ∼ 1500µS/ cm² in a condition where the supply amount of thick brine to be mixed with the fresh water has been adjusted under the feed-back control, an electrolytic current of the diluted brine supplied into the electrolytic cell 10 at start of electrolytic operation becomes higher than the standard current value L1 shown in Fig. 2 as shown in Fig. 3 and is controlled to the standard current value L after lapse of a time t2. If in such a case, the initial supply amount of thick brine is the same as the initial supply amount (B), the conductivity of the diluted brine will become excessive due to the conductivity (A2) of the fresh water higher than the conductivity (A1) of the fresh water. This causes change of the characteristics of electrolyzed water due to the occurrence of excessive electrolytic current at start of electrolytic operation and causes obstacle of the component parts the electrolyzed water production apparatus and waste consumption of thick brine.

To solve the problems, the controller 30 in the electrolyzed water production apparatus is provided with first memory means for preliminarily detecting the conductivity of fresh water supplied to the water supply conduit 17 from the source of water and for memorizing the detected conductivity of the fresh water, second memory means for detecting variation of the conductivity of the fresh water in a condition where the electrodes 13a, 13b of electrolytic cell 10 have been applied with a predetermined voltage (11V, 12V or 13V) and for memorizing a control map indicative of the variation of the conductivity as shown in Fig. 4, and the current detector 33 for detecting an electrolytic current caused in the electrolytic cell 10.

In activation the electrolyzed water production apparatus, the controller 30 calculates an electrolytic current caused in accordance with the memorized conductivity of the fresh water on a basis of the control map memorized in the second memory means and subtracts the calculated electrolytic current from the predetermined standard current value L1. Based on such calculation, the controller 30 controls the operation of brine pump 23 for adjusting a supply amount of thick brine to be mixed with the fresh water such that an electrolytic current of diluted brine supplied into the electrolytic cell 10 at start of electrolytic operation becomes a resultant value of subtraction from the standard current value L1. With such adjustment of the supply amount of thick brine, electrolyzed water of predetermined characteristic can be produced without causing excessive mixture of the thick brine with the fresh water and the occurrence of excessive electrolytic current in the electrolytic cell.

In another embodiment of the present invention, there is provided an electrolyzed water production apparatus of the type which comprises the electrolytic cell 10 provided to be supplied with diluted brine prepared by mixture of thick brine with fresh water from a source of water and the current detector for detecting an electrolytic current of the diluted brine under a predetermined voltage (12V) applied to electrodes 13a, 13b in the electrolytic cell, wherein the supply amount of thick brine to be mixed with the fresh water is adjusted under the feed-back control so that the electrolytic current of the diluted brine detected by the current detector becomes the predetermined standard value (10A), **characterized in that** the electrolyzed water production apparatus comprises memory means for memorizing a supply amount of thick brine to be mixed with the fresh water under the feed-back control in a prior electrolytic operation and control means for adjusting the supply amount of thick brine to be mixed with the fresh water to the memorized supply amount of the thick brine at start of the following electrolytic operation. In this embodiment, the supply amount of the thick brine to mixed with the fresh water is adjusted to an amount memorized in prior electrolytic operation at start of the following electrolytic operation. Accordingly, even if fresh water of different conductivity is supplied as the fresh water, electrolyzed water of desired characteristics can be produced without causing excessive mixture of the thick brine with the fresh water and the occurrence of excessive electrolytic current in the electrolytic cell.

### BRIEF DESCRIPTION OF THE DRAWINGS

In the drawings:
Fig. 1 is a schematic illustration of an electrolyzed water production apparatus in accordance with the present invention;
Fig. 2 is a graph indicative of variation of an electrolytic current of diluted brine with fresh water of standard property at the start of electrolytic operation;
Fig. 3 is a graph indicative of variation of an electrolytic current of diluted brine with fresh water of different property; and

Fig. 4 is a control map indicative of variation of an electrolytic current caused in accordance with the conductivity of fresh water.

### DESCRIPTION OF THE NUMERALS

10... electrolytic cell, 20... diluted brine preparation device, 23...brine pump, 30... controller, 31... source of electricity, 33... current detector

## Claims

1. An electrolyzed water production apparatus which comprises an electrolytic cell supplied with diluted brine prepared by mixture of thick brine with fresh water from a source of water and current detection means for detecting an electrolytic current of the diluted brine caused under a predetermined voltage applied to a set of electrodes in the electrolytic cell, wherein the supply amount of thick brine to be mixed with the fresh water is adjusted under feed-back control so that the electrolytic current of the diluted brine detected by the current detection means becomes a predetermined standard value,
**characterized in that** the electrolyzed water production apparatus comprises memory means for memorizing a control map indicative of an electrolytic current caused in accordance with the conductivity of the fresh water in a condition where the electrodes have been applied with the predetermined voltage, calculation means for calculating the value of the electrolytic current detected by the detection means on a basis of the control map and subtracting the calculated electrolytic current from the standard current value, and control means for adjusting the supply amount of thick brine to be mixed with the fresh water in such a manner that the electrolytic current of the diluted brine under the feed-back control becomes a resultant value of subtraction from the standard current value.

2. An electrolyzed water production apparatus as claimed in claim 1, wherein only the fresh water is introduced into the electrolytic cell before the diluted brine is electrolyzed at start of electrolytic operation to preliminarily detect the conductivity of the fresh water.

3. An electrolyzed water production apparatus which comprises an electrolytic cell provided to be supplied with diluted brine prepared by mixture of thick brine with fresh water from a source of water and current detection means for detecting electrolytic current of the diluted brine under
a predetermined voltage applied to a set of electrodes in the electrolytic cell, wherein the supply amount of thick brine to be mixed with the fresh water is adjusted under feed-back control in such a manner that the electrolytic current of the diluted brine detected by the current detection means becomes
a predetermined standard value,
**characterized in that** the electrolyzed water production apparatus comprises memory means for memorizing an amount of thick brine supplied to be mixed with the fresh water under the feed-back control during prior electrolytic operation and control means for adjusting the supply amount of thick brine to be mixed with the fresh water to the memorized supply amount of the thick brine at start of the following electrolytic operation.
